# EUROPEAN PATENT SPECIFICATION

(11) **EP 0 961 892 B1**
(45) Date of publication and mention of the grant of the patent: **25.09.2002**
(21) Application number: 98962573.6
(22) Date of filing: 21.12.1998
(51) Int. Cl.: F16K 31/34, F16K 31/385

(54) **FLOAT VALVE FOR W.C. CISTERN**
SCHWIMMERVENTIL FÜR EINEN TOILETTENSPÜLKASTEN
ROBINET DE CHASSE D'EAU COMMANDE PAR FLOTTEUR

(30) Priority: 24.12.1997 GB 9727141
(43) Date of publication of application: 08.12.1999
(73) Proprietor: THOMAS DUDLEY LIMITED, Dudley DY1 4SN (GB)
(72) Inventor: WILLIAMS, Adam, J., Finstall, Bromsgrove B60 3BZ (GB)
(74) Representative: Barnfather, Karl Jon, Dr.
(86) International application number: GB9803846
(87) International publication number: WO99034139

(56) References cited:
- FR-A- 2 724 958
- GB-A- 1 588 216

## Description

This invention relates to float controlled inlet valve assemblies for flushing cisterns of W.C.s and other sanitary appliances.

More specifically it relates to said assemblies of the kind known as equilibrium valve assemblies comprising a valve body provided with an inlet operatively connected to a water supply duct and an outlet opening into the cistern in use; valve mechanism within the body dividing the inlet from the outlet and including a valve seat, a flexible diaphragm on the downstream side of the seat selectively deformable into sealing engagement therewith and carrying a diaphragm insert having a through aperture with a monitoring pin therein to keep the aperture clear and restrict flow therethrough to a slow bleed. The assembly defines a pressure chamber containing the diaphragm and acting in conjunction with said slow bleed to keep water pressure On opposite faces thereof substantially in equilibrium so that only a small pressure differential operates the valve mechanism. A float carried on a lever applies closing force to a further bleed aperture in the part of the pressure chamber on the side of the diaphragm remote from the seat, when the float drops this aperture opens dropping pressure in said side and so displacing the diaphragm from the seat to allow inflow to the cistern. The arrangement enables the use of a small float and short lever so that a compact assembly readily fitting a wide range of cistern sizes and types is provided. Said known assemblies commonly incorporate a filter on the upstream side of the valve seat within the body to trap any grit or debris which might otherwise prevent the effective sealing of the valve seat, and a restrictor in the inlet.

Such a float controlled inlet valve assembly is known from GB-A-1 588 216.

The object of the invention is to provide improvements in equilibrium valves to facilitate assembly of the valve mechanism and its removal for servicing or replacing, for example for cleaning the filter and/or replacing the diaphragm or other parts; and/or in which the float and water level is readily adjusted and maintained following adjustment as for determining the required fill level in the cistern and hence the maximum volume of water used for each flushing operation; and/or providing improvements in the manufacture, assembly and operation of other parts of the valve assembly.

The invention provides an equilibrium valve as above defined in which the components of the valve mechanism including at least the filter, valve seat, diaphragm, and locating components securing the diaphragm and forming an outer end wall of the pressure chamber are realisably interconnected so as to be preassembled into unitary form for insertion into or removal from the body in a single operation.

Conveniently the filter and valve seat have realisably snap-fitting interengagement and the seat and said components have snap or press-fitting engagement together to hold the diaphragm in place independently of the body.

Preferably the assembled valve mechanism is secured in the body by a single nut clamping the pressure chamber against leakage.

Preferably the float has an upwardly extending stem in screwthreaded engagement through a female threaded aperture in a distal part of the lever for selective adjustment of the float height, said stem including one or more longitudinal grooves in the threaded part and the lever including a pawl formation urged into resilient engagement in the groove or grooves to resist relative rotation of the float stem from the selected position of adjustment.

The float stem may conveniently have four equi-angularly positioned grooves enabling adjustment in increments of 90 deg. indexing, i.e. one quarter of the screw pitch.

The pawl formation is conveniently formed integrally with the lever as a plastics moulding.

Preferably the outlet opening is defined by an outlet formation of or for connection to the valve body and being a plastics moulding defining an outlet passage including an operatively downwardly directed outlet spigot spaced from the valve body to which a flexible outlet tube, e.g. of "lay flat" type, may be secured to conduct the outflow to a low level of the cistern for more silent operation, the outlet formation also including an automatic air bleed with a one way flap valve opening into the outlet passage for ensuring that there is no back-flow siphonage from the cistern which could contaminate the water supply. Preferably the outlet formation is formed as a unitary plastics moulding including an insert defining the air bleed together with the associated flap valve, parts of the integral moulding providing a flexible hinge for the valve and a flexible strap connecting the insert to a main part of the outlet formation which is simply deformed to press-fit the insert into the formation to complete its assembly.

Said moulding may further include an integrally moulded securing collar linked to the main part by a further integral flexible strap so that the moulding includes provision for securing the flexible outlet tube to the spigot.

An example of the invention is now more particularly described with reference to the accompanying drawings wherein:-
Figure 1 is an exploded perspective view of an equilibrium valve assembly,
Figure 2 is a longitudinal exploded section of components of valve mechanism of the assembly,
Figure 3 is a longitudinal section of the latter components in assembled relationship,
Figure 4 is a longitudinal section of a moulding for forming an outlet formation of the assembly in pre-assembled condition,
Figure 5 is a like view of said moulding in an assembled condition, and
Figure 6 is a side elevation of a float and lever of the assembly,

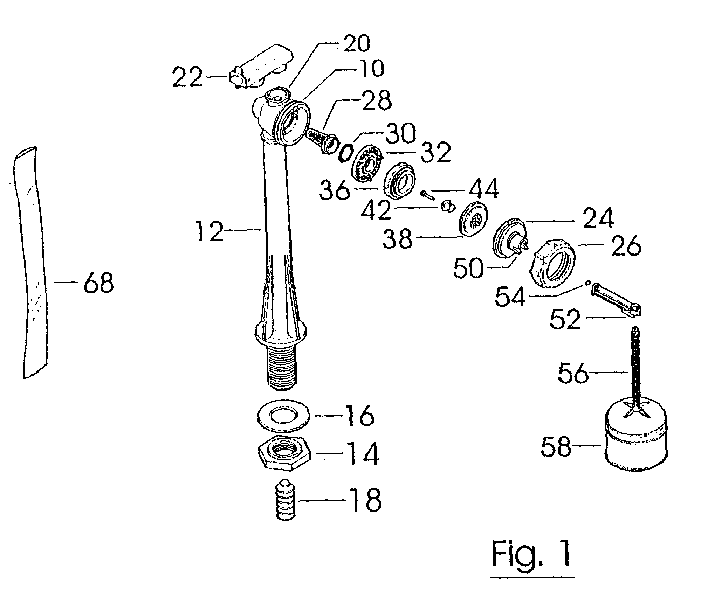

The valve includes a valve body 10 having a downwardly directed inlet shown in Figure 1 leading from a vertical inlet duct 12 which will be operatively secured in the floor of a cistern (not shown) in conventional manner by means of a nut 14 and sealing washer 16. Duct 12 will be connected in turn to a water supply pipe externally of the cistern in known manner and the connection may include a flow restriction insert 18 of known kind.

For some applications valve body 10 may be adapted to be connected to a horizontal inlet duct in an end or side wall of the cistern.

Body 10 also includes an upwardly directed outlet 20 for mounting an outlet formation 22 which will be described in more detail hereafter.

The main part of body 10 is generally cylindrical on a horizontal axis, the left hand end as viewed in the drawings being closed and the right hand end receiving a removable pressure chamber cover 24 securing by a flanged front nut 26.

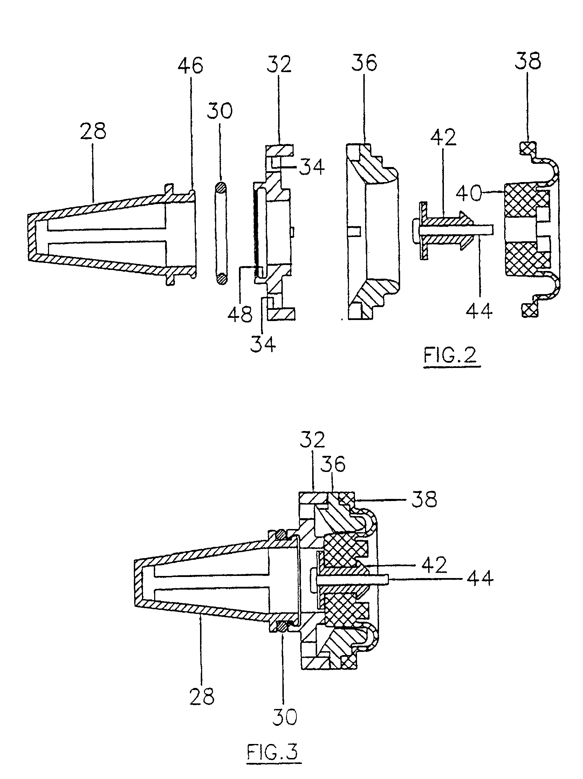

Valve mechanism is located within body 10 and comprises, in order from left to right, a filter 28 through which flow from the inlet passes and which is sealingly engaged in a partition of the body by an O-ring 30, an annular valve seat 32 having a radial flange defining a series of return flow passages 34 (Fig.2), a diaphragm support ring 36 formed for press-fitting engagement with the downstream side of seat 32, a flexible rubber or similar diaphragm 38 whose outer periphery is in resilient gripping engagement with the support ring 36, its centre part 40 (Fig.2) being axially displaceable to move its upstream end face in to and out of fluid sealing engagement with the downstream face surrounding the central opening of the valve seat 32.

Centre part 40 of diaphragm 38 has an axial through opening which receives a press-fitted diaphragm insert 42 having a central bore which receives in turn a headed monitoring pin 44.

The downstream end of filter 28 has a radially projecting ridge 46 which snap-engages into a mating recess 48 on the upstream side of seat 32, this engagement also locating O-ring 30.

The above mechanism is realisably secured in place by the pressure chamber cover 24 and nut 26.

Chamber 24 has an axial projection on its front face forming a trunnion 50 on which a float lever 52 is fulcrummed, the inner end of the lever bearing on a bleed aperture in cover 24, sealing it by means of a seal insert 54 located in the end of lever 52 to prevent leakage from the part of the pressure chamber defined between said cover and the outer side of diaphragm 38 while lever 52 is at its upper position.

The distal end of lever 52 receives the stem 56 of a float 58 described in more detail hereafter.

The valve mechanism operates in known manner as referred to above. When water is drawn from the cistern in use by a flushing operation float 58 drops, opening said bleed aperture to allow water to seep from said outer part of the pressure chamber. The resulting pressure differential allows displacement of the centre part 40 of diaphragm 38 off seat 32 permitting flow of water through the seat and back through apertures 34 to outlet 20. As the cistern fills float 58 rises to close the bleed aperture and the centre part closes seat 32 shutting off the flow, the central bore in insert 42 in conjunction with monitoring pin 44 allowing restricted bleed past the the diaphragm for pressure equilibrium in known manner.

Due to the interconnection described above the components of the valve mechanism assembled together as best seen in Figure 3 can be inserted or removed as a single unit from body 10. Pulling out the diaphragm 38 will bring with it all the components back to and including filter 28. Disassembly can then be effected away from the cistern for cleaning or replacement of any parts and reassembly, insertion is then made once more as a single unit in a simple operation without risk of dropping small parts into the cistern, to be secured once more by finally adding cover 24 and nut 26. Lever 52 is snap fitted back into trunnion 50 along with float 58.

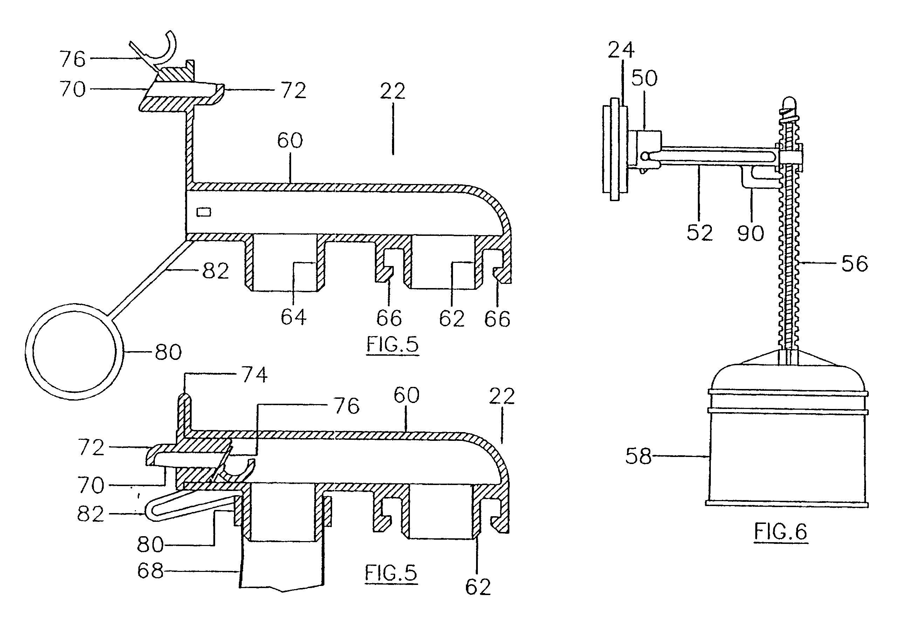

Outlet formation 22 will now be described in more detail referring to Figures 4 and 5. Formation 22 comprises a hollow horizontal main body part 60 with two downwardly directed spigots 62,64. Spigot 62 engages in outlet 20 of valve body 10 and is secured by snap-fitting lugs 66 which permit rotation relative to body 10 for most convenient positioning in the cistern.

The second spigot 64 is for the attachment of a downwardly extending flexible outlet tube 68 of the "lay flat" type as is known, which extends to a lower level of the cistern. As the end of this tube will be below the cistern water level there is a possibility that water might siphon back into body 10 with risk of contamination of the connected supply. To guard against this an automatic air bleed opens into main part 60.

Formation 22 is formed as an integral single plastics moulding and includes said air bleed 70 defined in a stopper 72 which is a snap-fit in an otherwise open end of portion 60. Stopper 72 is linked to main part 60 by an integral moulded flexible strap 74 which can be distorted as shown in Figure 5 for insertion of the stopper.

Integrally moulded with stopper 72 is a flap valve 76 including a flexible hinge. Valve 76 coacts with the inner end of air bleed 70 within formation 22 when assembled as seen in Figure 5, pressure within formation 22 keeping it closed but if there is a drop in pressure therein which might otherwise initiate siphoning valve 76 will open to admit air.

Also moulded integrally with the rest of the outlet formation 22 in this example is a securing collar 80 for the tube 68, connected to the main part of the moulding by a flexible band 82 long enough to allow collar 80 to be located around spigot 64. This again facilitates assembly as the collar cannot be separated and lost and is attached ready for use.

Figure 6 shows the assembly of float 58 to lever 52. The drum shaped float 58 is a plastics moulding having the stem 56 integral therewith extending axially upwards from its top face. Stem 56 is provided with a male screwthread along its length and is also formed with four equi-angularly positioned longitudinal grooves cutting through the thread.

The distal end of lever 52 has a female threaded vertical aperture with which stem 56 screw-engages enabling the height of float 58 to be adjusted by rotating it relative to the lever. As the moulded thread is of coarse pitch and may not tightly fit the lever aperture there is a risk that any preset adjustment may not be maintained during operation. To prevent unwanted rotation of the float relative to the lever the latter incorporates an integrally moulded resilient pawl formation 90 in the form of a flexible blade whose free end is resiliently urged into engagement with a respective groove in stem 56. Pawl 90 permits manual adjustment and provides indexing in 90 deg. increments, thus fine adjustment down to one quarter of the screw pitch can be effected and the engagement of pawl 90 with the appropriate groove prevents inadvertent displacement once adjustment has been completed.

## Claims

1. A float controlled inlet valve assembly comprising a valve body (10) provided with an inlet (12) operatively connected to a water supply duct and an outlet (20) opening into a cistern in use;
a valve mechanism within the body dividing the inlet from the outlet and including a valve seat (32), a flexible diaphragm (38) on the downstream side of the seat selectively deformable into sealing engagement therewith, and a diaphragm insert (42)
carried by the diaphragm and having a through aperture with a monitoring pin (44) therein to keep the aperture clear and restrict flow therethrough to a slow bleed, said assembly defining a pressure chamber containing the diaphragm and acting in use in conjunction with said slow bleed to keep water pressure on opposite faces thereof substantially in equilibrium so that only a small pressure differential operates the valve mechanism; a further bleed aperture in the part of the pressure chamber on the side of the diaphragm remote from the seat; a float (58) carried on a lever (52) applying a closing force to said further aperture, when the float drops this aperture opens, dropping pressure in said side and so displacing the diaphragm from the seat to allow inflow to the cistern; and a filter (28) on the upstream side of the valve seat within the body **characterised in that** the components of the valve mechanism including at least the filter, valve seat, diaphragm, and locating components (24) securing the diaphragm and forming an outer end wall of the pressure chamber are releasably interconnected so as to be preassembled into unitary form for insertion into or removal from the body in a single operation.

2. An assembly as in claim 1 **characterised by** including a restrictor (18) in the inlet.

3. An assembly as in claim 1 **characterised in that** the filter (28) and valve seat (32) have releasably snap-fitting interengagement and the seat and said locating components (24) have snap or press-fitting engagement together to hold the diaphragm (38) in place independently of the body (10).

4. An assembly as in claim 3 **characterised in that** the assembled valve mechanism is secured in the body (10) by a single nut (26) clamping the pressure chamber against leakage.

5. An assembly as in claim 1 **characterised in that** the float (58) has an upwardly extending stem (56) in screwthreaded engagement through a female threaded aperture in a distal part of the lever (52) for selective adjustment of the float height, said stem including one or more longitudinal grooves in the threaded part and the lever including a pawl formation (90) urged into resilient engagement in the groove or grooves to resist relative rotation of the float stem from the selected position of adjustment.

6. An assembly as in claim 5 **characterised in that** the float stem (56) has four equi-angularly positioned grooves enabling adjustment in increments of 90 deg. indexing.

7. An assembly as in claim 5 **characterised in that** the pawl formation (90) is formed integrally with the lever (52) as a plastics moulding.

8. An assembly as in claim 1 **characterised in that** the outlet opening is defined by an outlet formation (22) of or for connection to the valve body (10) and being a plastics moulding including an operatively downwardly directed outlet spigot (64) spaced from the valve body to which a flexible outlet tube (68) may be secured to conduct the outflow to a low level of the cistern for more silent operation, the outlet formation also including an automatic air bleed (70) with a one way flap valve (76) opening into the outlet opening for ensuring that there is no back-flow siphonage from the cistern which could contaminate the water supply.

9. An assembly as in claim 8 **characterised in that** the outlet formation (22) is formed as unitary plastics moulding including an insert (72) defining the air bleed (70) together with the associated flap valve (76), parts of the integral moulding providing a flexible hinge for the valve and a flexible strap (74) connecting the insert to a main part of the outlet formation which is simply deformed to press-fit the insert into the formation to complete its assembly.

10. An assembly as in claim 9 **characterised in that** the said moulding further includes an integrally moulded securing collar (80) linked to the main part by a further integral flexible strap (82) so that the moulding includes provision for securing the flexible outlet tube to the spigot.

## Patentansprüche

1. Einlaßventilanordnung mit Schwimmerregelung, umfassend einen Ventilkörper (10), welcher mit einem Einlaß (12), welcher geeignet mit einer Wasserversorgungsleitung verbunden ist, und einer Öffnung eines Auslasses (20), welche sich bei Verwendung in einen Wasserspeicher öffnet, versehen ist; eine Ventilvorrichtung in dem Körper, welche den Einlaß von dem Auslaß trennt und einen Ventilsitz (32), ein flexibles Plattenventil (38) auf der Abstromseite des Sitzes, welches selektiv zu einem dichten Eingriff damit verformbar ist, und einen Plattenventileinsatz (42), welcher an Plattenventil angebracht ist und eine Durchgangsöffnung mit einem Kontrollstift (44) darin umfaßt, um die Öffnung freizuhalten und eine Strömung dadurch auf ein langsames Ausströmen zu beschränken, wobei die Anordnung eine Druckkammer definiert, welche das Plattenventil enthält und bei Verwendung in Verbindung mit dem langsamen Ausströmen geeignet wirkt, um den Wasserdruck auf gegenüberliegenden Seiten davon im wesentlichen im Gleichgewicht zu halten, so daß es lediglich ein kleiner Druckunterschied ist, welcher die Ventilvorrichtung betätigt; eine weitere Ablaßöffnung in dem Abschnitt der Druckkammer auf der Seite des Plattenventils fern von dem Sitz; einen Schwimmer (58), welcher an einem Hebel (52) angebracht ist, welcher eine Schließkraft auf die weitere Öffnung ausübt, wobei sich diese Öffnung öffnet, wenn der Schwimmer absinkt, wodurch der Druck auf dieser Seite abfällt und somit das Plattenventil von dem Sitz entfernt wird, um ein Einströmen in den Speicher zu ermöglichen; und einen Filter (28) auf der Zustromseite des Ventilsitzes in dem Körper, **dadurch gekennzeichnet, daß** die Bauelemente der. Ventilvorrichtung, welche mindestens den Filter, den Ventilsitz, das Plattenventil und Anordnungselemente (24), welche das Plattenventil befestigen und eine äußere Endwand der Druckkammer bilden, umfassen, lösbar derart verbunden werden, daß diese zu einer einheitlichen Gestalt zur Einführung in bzw. Entfernung aus dem Körper in einem einzigen Vorgang vorangeordnet werden.

2. Anordnung nach Anspruch 1, **dadurch gekennzeichnet, daß** diese eine Drossel (18) in dem Einlaß umfaßt.

3. Anordnung nach Anspruch 1, **dadurch gekennzeichnet, daß** der Filter (28) und der Ventilsitz (32) einen lösbaren Schnappeingriff aufweisen und der Sitz und die Anordnungselemente (24) einen Schnapp- bzw. Druckeingriff miteinander aufweisen, um das Plattenventil (38) unabhängig von dem Körper (10) am Ort zu halten.

4. Anordnung nach Anspruch 3, **dadurch gekennzeichnet, daß** die zusammengesetzte Ventilanordnung durch eine einzelne Mutter (26), welche die Druckkammer gegen ein Auslaufen schließt, in dem Körper (10) befestigt ist.

5. Anordnung nach Anspruch 3, **dadurch gekennzeichnet, daß** der Schwimmer (58) eine nach oben verlaufende Stange (56) in Schraubgewindeeingriff durch eine weibliche Gewindeöffnung in einem distalen Abschnitt des Hebels (52) zur selektiven Einstellung der Schwimmerhöhe aufweist, wobei die Stange eine oder mehrere Längsnuten in dem Gewindeabschnitt umfaßt und der Hebel ein Sperrklinkenelement (90) umfaßt, welches in elastischen Eingriff in der Nut bzw. den Nuten gedrängt wird, um einer Relativdrehung der Schwimmerstange aus der ausgewählten Einstellungsposition zu widerstehen.

6. Anordnung nach Anspruch 5, **dadurch gekennzeichnet, daß** die Schwimmerstange (56) vier in gleichen Winkeln angeordnete Nuten zum Ermöglichen einer Einstellung in Stellschritten von 90 Grad aufweist.

7. Anordnung nach Anspruch 5, **dadurch gekennzeichnet, daß** das Sperrklinkenelement (90) einstückig mit dem Hebel (52) als Kunststoff-Formkörper ausgebildet ist.

8. Anordnung nach Anspruch 1, **dadurch gekennzeichnet, daß** die Auslaßöffnung durch ein Auslaßelement (22) einer bzw. für eine Verbindung mit dem Ventilkörper (10) definiert ist und ein Kunststoff-Formkörper ist, welcher einen geeignet nach unten gerichteten Zapfen (64) in Abstand von dem Ventilkörper umfaßt, an welchem ein flexibler Auslaßschlauch (68) befestigt werden kann, um den Ausfluß zu einem niedrigen Niveau des Speichers zu leiten, um eine leisere Arbeitsweise zu bewirken, wobei das Auslaßelement ferner eine automatische Entlüftung (70) mit einem Einweg-Klappenventil (76), welches sich in die Auslaßöffnung öffnet, umfaßt, um zu gewährleisten, daß keine Rückflußansaugung aus dem Speicher erfolgt, welche die Wasserversorgung verunreinigen könnte.

9. Anordnung nach Anspruch 8, **dadurch gekennzeichnet, daß** das Auslaßelement (22) als einheitlicher Kunststoff-Formkörper ausgebildet ist, welcher einen Einsatz (72) umfaßt, welcher die Entlüftung (70) gemeinsam mit dem zugeordneten Klappenventil (76) definiert, wobei Abschnitte des einstückigen Formkörpers ein flexibles Gelenk für das Ventil und ein flexibles Band (74), welches den Einsatz mit einem Hauptabschnitt des Auslaßelements verbindet, welches einfach verformt wird, um den Einsatz in dem Element in Druckverschluß zu bringen, um die Anordnung davon zu vollenden, liefern.

10. Anordnung nach Anspruch 9, **dadurch gekennzeichnet, daß** der Formkörper ferner eine einstückig ausgebildete Befestigungsmanschette (80) umfaßt, welche durch ein weiteres flexibles Band (82) mit dem Hauptabschnitt verbunden ist, so daß der Formkörper zum Befestigen des flexiblen Auslaßschlauchs an dem Zapfen eingerichtet ist.

## Revendications

1. Soupape d'entrée pour chasse d'eau commandée par flotteur comprenant un corps de soupape (10) comportant une admission (12) reliée de manière fonctionnelle à une conduite d'alimentation en eau et à une sortie d'écoulement (20) située dans un réservoir de chasse en service ; un mécanisme de soupape situé dans le corps divisant l'admission depuis la sortie d'écoulement et comportant un siège de soupape (32), un diaphragme flexible (28) situé en aval du siège déformable de façon sélective en engagement étanche avec celui-ci, et une monture porteuse de diaphragme (42) portée par le diaphragme et présentant une ouverture traversante avec un téton de commande dans celle-ci pour garder l'ouverture libre et restreindre l'écoulement à travers celle-ci en une décharge lente, ladite soupape définissant une chambre de pression contenant le diaphragme et agissant en utilisation en combinaison avec ladite décharge lente pour garder la pression d'eau sur les faces opposées de celui-ci sensiblement en équilibre de façon que seule une faible pression différentielle actionne le mécanisme de soupape ; une ouverture de décharge supplémentaire dans la partie de la chambre de pression située sur le côté du diaphragme éloigné du siège ; un flotteur (58) porté sur un levier appliquant une force de fermeture à ladite ouverture, lorsque le flotteur descend cette ouverture s'ouvre, faisant chuter la pression dudit côté et déplaçant ainsi le diaphragme depuis le siège pour permettre l'entrée vers le réservoir de chasse ; et un filtre (28) situé en amont du siège de soupape à l'intérieu du corps, **caractérisée en ce que** les composants du mécanisme de soupape comprenant au moins le filtre, le siège de soupape, le diaphragme et les composants de fixation (24) maintenant le diaphragme en place et formant une paroi d'extrémité externe de la chambre de pression sont reliés entre eux de manière amovible de façon à être pré-assemblés en unités pour être insérés dans ou retirés du corps en une seule opération.

2. Soupape selon la revendication 1, **caractérisée en ce qu'**il comporte un restricteur (18) dans l'admission.

3. Soupape selon la revendication 1, **caractérisée en ce que** le filtre (28) et le siège de soupape (32) présentent des interconnexions encliquetables amovibles et **en ce que** le siège et lesdits composants de fixation (24) présentent un engagement mutuel par encliquetage ou par serrage pour maintenir le diaphragme (38) en place indépendamment du corps (10).

4. Soupape selon la revendication 3, **caractérisée en ce que** le mécanisme de soupape assemblé est maintenu dans le corps (10) par un seul écrou (26) serrant contre la chambre de pression pour éviter les fuites.

5. Soupape selon la revendication 1, **caractérisée en ce que** le flotteur (58) présente une tige (56) se prolongeant vers le haut s'engageant à filetage à travers une ouverture filetée femelle située dans une partie distale du levier (52) pour un ajustement sélectif de la hauteur du flotteur, ladite tige comportant une ou plusieurs gorges longitudinales dans la partie filetée et le levier comportant une structure à cliquet (90) forcée en engagement élastique dans la ou les gorge(s) pour empêcher la rotation relative de la tige du flotteur à partir de la position d'ajustement choisie.

6. Soupape selon la revendication 5, **caractérisée en ce que** la tige (56) du flotteur présente quatre gorges positionnées de manière équiangulaire permettant l'ajustement par incrément d'indexation de 90 degrés.

7. Soupape selon la revendication 5, **caractérisée en ce que** la structure à cliquet (90) est formée d'une seule pièce avec le levier (52) par moulage de matière plastique.

8. Soupape selon la revendication 1, **caractérisée en ce que** l'ouverture de sortie d'écoulement est définie par une conformation d'orifice d'écoulement (22) de ou pour la connexion au corps de soupape (10) et étant un objet moulé en matière plastique comportant un embout d'écoulement (64) dirigé de manière fonctionnelle vers le bas distant du corps de soupape auquel un tube d'orifice d'écoulement flexible (68) peut être solidarisé pour conduire l'échappement vers un niveau bas du réservoir pour un fonctionnement plus silencieux, la conformation d'orifice d'écoulement comportant également une purge d'air automatique (70) avec un clapet antiretour (76) ouvrant dans l'ouverture d'orifice d'écoulement pour assurer qu'il n'y a pas de siphonnage par refoulement provenant du réservoir qui pourrait contaminer l'alimentation d'eau.

9. Soupape selon la revendication 8, **caractérisée en ce que** la conformation d'orifice d'écoulement (22) est formée en tant qu'objet moulé unitaire d'une matière plastique comportant un insert (72) définissant la purge d'air (70) avec le clapet (76) associé, des parties du moulage d'une seule pièce fournissant une articulation flexible pour la soupape et une bride flexible (74) reliant l'insert à une partie principale de la conformation d'orifice d'écoulement qui est simplement déformée pour s'ajuster par serrage dans la conformation et compléter son assemblage.

10. Soupape selon la revendication 9, **caractérisée en ce que** l'objet moulé comporte en outre un collier moulé d'une seule pièce (80) relié à la partie principale par une bride flexible supplémentaire d'une seule pièce (82) de façon que l'objet moulé comporte des éléments en attente prévus pour maintenir le tube d'orifice d'écoulement flexible vers l'embout d'écoulement.
